# EUROPÄISCHE PATENTSCHRIFT

(11) **EP 2 858 927 B1**
(45) Veröffentlichungstag und Bekanntmachung des Hinweises auf die Patenterteilung: **17.05.2017**
(21) Anmeldenummer: 13727578.0
(22) Anmeldetag: 31.05.2013
(51) Int. Cl.: B65G 9/00, F16D 57/06, F04C 15/00, F04C 2/18, F04C 14/26

(54) **LAUFWAGEN FÜR EINEN SCHWERKRAFTFÖRDERER MIT EINEM BREMSMODUL**
TROLLEY FOR A GRAVITY CONVEYOR WITH A BRAKE MODULE
CHARIOT POUR TRANSPORTEUR PAR GRAVITÉ AVEC UN MODULE DE FREINAGE

(30) Priorität: 09.06.2012 DE 102012011485
(43) Veröffentlichungstag der Anmeldung: 15.04.2015
(73) Patentinhaber: Volkswagen Aktiengesellschaft, 38440 Wolfsburg (DE)
(72) Erfinder: RIETIG, Carsten, 38442 Wolfsburg (DE); KICK, Marco, 38444 Wolfsburg (DE)
(86) Internationale Anmeldenummer: PCT/EP2013/061263
(87) Internationale Veröffentlichungsnummer: WO 2013/182486

(56) Entgegenhaltungen:
- AT-B- 378 159
- DE-A1-102008 004 756
- FR-A- 1 601 324
- FR-A1- 2 258 563
- GB-A- 2 082 532
- US-A- 5 281 033

## Beschreibung

Die Erfindung betrifft einen Laufwagen für einen Schwerkraftförderer.

Die Schwerkraft wird bereits seit langer Zeit zum Transport von Stückgütern genutzt. Dabei bietet sich der Vorteil, dass keine zusätzlichen Antriebe benötigt werden, wenn die entsprechende Neigung der Förderstrecke realisiert werden kann. Bei Schwerkraftförderern wirkt als antreibende Kraft auf das Fördergut ausschließlich die Schwerkraft. Das Fördergut gleitet oder rollt beispielsweise auf Rutschen oder Rollenbahnen entweder auf einer geneigten Förderstrecke abwärts oder es fällt wie bei Fallrohren im freien Fall. Problematisch bei diesen Schwerkraftförderern ist, dass die Fördergeschwindigkeit sowohl wesentlich vom Reib- bzw. Widerstandsbeiwert zwischen Fördergut und den Tragelementen als auch von der Fördergutmasse beeinflusst wird. Die Fördergeschwindigkeit ist entweder so gering, dass das Gut stehen bleibt bzw. so hoch, dass die Gefahr einer Kollision mit dem vorherigen geförderten Gut besteht.
Der beim Abwärtsgleiten oder Rollen auftretende Reibungswiderstand - der Gleit- bzw. Rollreibungswiderstand muss durch die auf das Fördergut wirkende Schwerkraft überwunden werden. Daher sind Schwerkraftförderer derzeit nur dort einsetzbar, wo keine exakt definierte Fördergeschwindigkeit eingehalten werden muss, da diese - abgesehen vom freien Fall - immer von den aktuellen Reibungsverhältnissen zwischen Fördergut und Gleit- bzw. Rollenbahn abhängt. Die Reibungsverhältnisse können sich dabei im Laufe ihres Betriebes in gewissen Grenzen ändern, z.B. infolge Verschmutzung, Verschleiß, aber auch durch schwankende Guteigenschaften, welche die Reibungsverhältnisse beeinflussen. So dienen Schwerkraftförderer derzeit hauptsächlich als Verkettungselemente zwischen angetriebenen Stetigförderern, als Beschickungsförderer und zur abwärts geneigten, steilen oder senkrechten Abwärtsförderung von Schütt- und Stückgütern. Dabei lassen sich bisherige Schwerkraftförderer in die drei Grundtypen Rutschen, Fallrohre und Rollenbahnen einteilen, wobei diese immer flurgebundene bzw. aufgeständerte Förderer darstellen.

Beim Rutschen gleitet das Fördergut auf einer geneigten offenen oder geschlossenen Rinne (Rutsche) abwärts. Der Neigungswinkel der Rutsche muss dabei größer als der Reibungswinkel der Ruhe zwischen Fördergut und Rutsche sein, damit das Gut an jeder Stelle der Rutsche von selbst losrutscht und auch nicht von selbst zum Stillstand kommen kann. Dessen ungeachtet wird das Gut mit steigender Förderlänge bei gleichbleibender Gleitreibungszahl beschleunigt. Rutschen werden als Einweg-, Mehrweg- und Teleskoprutschen in gerader oder gekrümmter Ausführung hergestellt. Die meist aus Holz oder Stahlblech gefertigten gerade verlaufenden Rutschen erhalten, je nach Fördergut, einen Neigungswinkel von 20 bis 80°. Die Gleitbahnen der Rutschen werden häufig mit Belägen aus Kunststoffen versehen, die den Verschleiß und die Reibung verringern. Die Gutbewegung auf der Rutsche entspricht dem Prinzip der schiefen Ebene.

Wendelrutschen besitzen im Gegensatz zu den geraden Rutschen eine schraubenförmige Gleitbahn, wodurch auf das Fördergut außer den Schwer- und Reibungskräften noch Fliehkräfte wirken, welche wiederum die Reibungskräfte erhöhen. Bei voll ausgebildeter Wendel (Vollwendel; mindestens eine ganze Steigung der Schraubenlinie bzw. mindestens eine Gutumlenkung in der Horizontalen von 360°) dienen die Wendelrutschen zur senkrechten Abwärtsförderung. Ist nur eine Umlenkung des Förderstromes < 360° in der Horizontalen gefordert, genügt ein Wendelsegment. Beide Rutschen sind sowohl für Stück- als auch für Schüttgüter geeignet.

Fallrohre dienen hingegen zur senkrechten Abwärtsförderung von unempfindlichen Schüttgütern auf Lagerplätzen, in Schiffen usw. Neben einzelnen einsetzbaren Fallrohren, die auch geneigt zu betreiben sind (analog Rutsche), kommen komplette Fallrohrsysteme zum Einsatz.

Rollenbahnen entsprechen in Aufbau und Anforderungen an das Fördergut so genannten Rollenförderern, nur dass die Rollenbahnen im Gegensatz zu Rollenförderern keine angetriebenen Rollen benötigen, da es sich hier um Schwerkraftförderer, d.h. um ausschließliche Abwärtsförderung handelt. Rollenbahnen haben Tragrollen, deren Achsen fest in Längsträger (-holme) eingelegt sind. Sie eignen sich zur Förderung von Stückgütern mit ebenen, stabilen und hinreichend großen Auflageflächen. Durch den Einsatz von Kurven, Weichen usw. können vielfältige und auch komplizierte Förderaufgaben bewältigt werden. Bei längeren Förderstrecken werden zur Begrenzung der Fördergeschwindigkeit Bremsrollen in die Förderstrecke eingebaut, deren Bremsmoment von in den Rollen eingebauten Fliehkraftreibungsbremsen oder hydraulischen Bremsen erzeugt wird.

Derzeit bekannte Hängeförderer werden als Elektrohängebahnen oder Power-and-Free-Förderer eingesetzt. Ein Elektrohängebahnsystem (EHB) besteht aus einem Schienensystem, auf dem individuell angetriebene EHB-Fahrzeuge fahren. In der Schiene sind Schleifleitungen integriert, die als Strom- und Informationsleitungen die Fahrzeuge mit Energie und Steuerinformationen versorgen. Die Fahrwerke werden durch einen eigenen Elektromotor über ein Reibrad angetrieben. Der Reibschluss begrenzt die Steigfähigkeit des Fahrwerkes auf Steigungen bis 30° mit einer Nutzlast von 250 kg oder 45° mit 100 kg Nutzlast. Höhensprünge werden sonst mit einem Hubwerk, einem Aufzug mit Schienenabschnitt, überbrückt. Verschiebeweichen verzweigen Materialflüsse und führen sie wieder zusammen. Dazu wird ein Schienenstück verschoben, so dass entweder der gerade oder der gebogene Schienenabschnitt in den Förderkurs eingeschoben wird. Elektrohängebahnsysteme weisen jedoch zahlreiche Nachteile auf. So sind Steig- und Gefällstrecken nur für kleinere Systeme bis ca. 0,2 t Nutzlast möglich und Höhensprünge erfordern Hub- und Senkstationen. Des Weiteren sind Motor und damit Antriebe notwendig, so dass dieses System weniger energieeffizient als ein Schwerkraftförderer ist. Hinzu kommt, dass Teile verschleißen und ggf. ausgetauscht werden müssen. Dadurch entstehen hohe Kosten und Wartungsaufwand.

Die Strecke von Power-and-Free-Fördersystemen besteht aus zwei übereinander angeordneten Schienen. In der oberen Schiene läuft kontinuierlich die (Power-) Kette und zieht über Mitnehmer die in der unteren Schiene laufenden (Free-) Wagen, an denen die Last hängt. Da sich die Wagen nach Bedarf von der laufenden Power-Kette entkoppeln und wieder einklinken lassen, können Staustrecken und Weichen realisiert werden. Auch Power-and-Free-Fördersysteme weisen zahlreiche Nachteile auf. Zunächst entsteht aufgrund der verwendeten Ketten eine extrem hohe Lärmentwicklung. Durch die geschlossenen Kreisläufe verfügen die Systeme über einen komplexen Aufbau. Für das System sind Motoren zum Antrieb notwendig. Dazu verschleißen Systemkomponenten und müssen ggf. ausgetauscht werden. Hierdurch entstehen hohe Kosten und Wartungsaufwand.

Diese beschriebenen Systeme Rutsche, Fallrohr und Rollenbahn arbeiten ausschließlich flurgebunden. Die Elektrohängebahn und das Power-and-Free-Fördersystem sind zwar aufgeständert bzw. flurfrei aber mit externen Antrieben ausgestattet und müssen folglich mit Strom, Hydraulik etc. verbunden werden.

Schwerkraftförderer und insbesondere Hängeförderer benötigen häufig aufgrund des fehlenden Antriebes eine Komponente, welche zur Bremsung des geförderten Gutes geeignet ist. Die DE 1 935 475 U zeigt eine mit einer Bremse versehene Rolle für Fördergutträger oder Rollenbahnen, wobei ein eine geschlossene mit Öl gefüllte Kammer umgebender Drehkörper vorgesehen ist, in welcher Kammer eine Zahnradpumpe mit einem auf einer ortsfestenden Achse angeordneten Zahnrad sowie ein auf einer im Drehkörper gelagerten Achse sitzenden und sich mit diesem drehenden, die Pumpe antreibenden Zahnrad angeordnet ist, die bei Drehung der Rolle das in der Kammer befindliche Öl kontinuierlich in Zirkulation versetzt und damit eine sich aus dem Strömungswiderstand ergebende Bremswirkung erzeugt. Nachteilig an dieser Konstruktion ist jedoch, dass sie nur in einer Richtung eine Bremswirkung erzielen kann. In zumindest zwei Bewegungsrichtungen eine Bremswirkung zu erzielen kann dann nötig sein, wenn sich der Neigungsverlauf innerhalb des Förderweges ändert. Dies kann dann der Fall sein, wenn die Förderstrecke wippenartig ausgestaltet ist oder bei Verwendung eines Hängeförderers eine Bewegungsumkehr des Laufwagens stattfindet. Das Dokument FR 1 601 324 offenbart ein weiteres Beispiel einer Förderrolle mit einer Bremsfunktion.

Das Dokument AT 378 159 offenbart ein Bremsmodul für ein Fahrrad.

Hier setzt die Erfindung an. Der Erfindung liegt die Aufgabe zugrunde, ein verschleißfreies, energieeffizientes Bremssystem für einen Schwerkraftförderer bereitzustellen, welcher sein erforderliches Bremsmoment in Abhängigkeit der zu fördernden Last und Geschwindigkeit in zumindest zwei Bewegungsrichtungen selbst regelt.
Gelöst wird diese Aufgabe durch die Merkmale des Patentanspruchs 1. Die Unteransprüche betreffen besonders bevorzugte Ausgestaltungen der Erfindung.

Erfindungsgemäß wird ein Laufwagen für einen Schwerkraftförderer mit einem Bremsmodul vorgeschlagen, welches eine erste Welle sowie eine zweite Welle sowie eine Hydraulikpumpe aufweist und zur Förderung von Flüssigkeiten geeignete Teile der Hydraulikpumpe mit der ersten Welle verbunden sind. Dabei weist das Bremsmodul zumindest einen Fluidkanal auf, an dem ein zur Drosselung der Fließgeschwindigkeit einer in dem Fluidkanal befindlichen Flüssigkeit sowie zum Verschließen des Fluidkanals geeignetes Drosselelement angeordnet ist, wobei das Drosselelement dazu geeignet ist, den Fluidkanal zumindest an zwei Stellen zu verengen. Durch diese Ausgestaltung eines Bremsmoduls ist in vorteilhafter Weise erreicht, dass dieses seine Bremswirkung aufgrund der Ausnutzung eines aufkommenden Staudrucks in zumindest zwei Richtungen entfalten kann. Das Prinzip einer Hydraulikpumpe wird hierbei genutzt, um die Flüssigkeit durch ein angetriebenes Zahnrad, innerhalb des Fluidkanals in Bewegung zu versetzen. Dieses Zahnrad steht dabei mit einer ersten Welle in Verbindung, die durch Einflüsse außerhalb des Bremsmoduls bewegt wird, d.h. durch ein mit der ersten Welle verbundenes Rad des Laufwagens, an welchem das zu bewegende Gut festgelegt ist. Als Schwerkraftförderer ist im Sinne der Erfindung jede schiefe Ebene zu verstehen, die dazu geeignet ist, Güter mit Hilfe der Schwerkraft von einem relativ zum Endpunkt höher liegenden Startpunkt zum Endpunkt zu fördern. Die Erfindung wird bei einem Hängeförderer eingesetzt, bei welchem der Laufwagen mittels Rädern auf einer Rollenbahn von einem Punkt zum nächsten rollt und das Gut unterhalb des Laufwagens und unterhalb der Rollenbahn gefördert wird.
In bevorzugter Ausgestaltung der Erfindung ist das Drosselelement in einer Drosselkammer innerhalb des Fluidkanals angeordnet, wobei die Drosselkammer zumindest teilweise einen größeren Durchmesser als der übrige Fluidkanal aufweist. Dabei ist die Drosselkammer Teil des Fluidkanals und würde auf Grund seines gegenüber des übrigen Fluidkanals größeren Durchmessers zunächst eine höhere Fließgeschwindigkeit der Flüssigkeit in seinem Bereich erlauben. Hier ist jedoch das Drosselelement angeordnet, welches das Volumen der Drosselkammer verkleinert und bei Bedarf den Fluidkanal gänzlich verschließen kann. Durch die oben beschriebene Maßnahme ist erreicht, dass das Drosselelement im Fluidkanal zunächst ohne Beeinträchtigung der Fließgeschwindigkeit der Flüssigkeit angeordnet werden kann.
Das Drosselelement weist in weiterer bevorzugter Ausgestaltung der Erfindung an seinen freien Enden im Wesentlichen stabförmige Bereich und im Wesentlichen mittig einen Drosselbereich auf. Der Durchmesser des Drosselbereiches ist dabei im Verhältnis zu den stabförmigen Bereichen im Durchmesser größer ausgestaltet. Durch diese Maßnahme ist erreicht, dass der Durchmesser des Fluidkanals zur Drosselung zumindest zweistufig verengt werden kann, indem zunächst ein stabförmiger Endbereich des Drosselelements aus der Drosselkammer heraus in den übrigen Fluidkanal überführt werden kann, wodurch der Durchmesser des Fluidkanals vergleichsweise gering verkleinert wird. Bei größerem Drosselbedarf ist es jedoch auch möglich, dass der Drosselbereich, welcher einen größeren Durchmesser als die stabförmigen Bereiche aufweist, in der Drosselkammer hin zum übrigen Fluidkanal verschoben wird, um den Durchmesser des Fluidkanals weiter zu beschränken oder den Fluidkanal gänzlich zu verschließen. Durch diese Ausgestaltung wird erfindungsgemäß erreicht, dass das Bremsmodul mehrstufig gedrosselt werden kann.

In weiterer bevorzugter Ausgestaltung der Erfindung stehen Federn in Verbindung mit dem Drosselbereich und Wandungen der Drosselkammer oder können mit dem Drosselbereich und den Wandungen der Drosselkammer in Verbindung gebracht werden. Durch die Anordnung von Federn an dem Drosselelement und innerhalb der Drosselkammer wird erreicht, dass die in dem Fluidkanal fließende Flüssigkeit zunächst die Federkraft überwinden muss, um das Drosselelement innerhalb des Fluidkanals und der Drosselkammer zu verschieben. Dabei kann die Federkraft nach den Bedürfnissen des Transports, beispielsweise nach dem Gewicht der Güter und/oder der Neigung der Förderstrecke, gewählt werden. Durch eine Veränderung der Vorspannung der Feder, kann der Durchfluss des Medium und somit die Drosselwirkung reguliert werden. Diese Veränderung kann mittels einer stufenweisen Einstellung (Rasterung) der Einschraubtiefe des Drosselsystems variiert werden. Hierfür können erfindungsgemäß Mittel, beispielsweise Einstellschrauben, welche als Drosselventil dienen, zur Einstellung des Federdrucks der Federn am Bremsmodul angeordnet sein. Durch diese Maßnahme ist erreicht, den Federdruck bedarfsweise von außen regulieren zu können.
In weiterer bevorzugter Ausgestaltung der Erfindung liegen die stabförmigen Bereiche des Drosselelements zumindest teilweise innerhalb der Federn. Die Federn sind dadurch durch das Drosselelement gehalten und können nicht bei Beanspruchung innerhalb der Drosselkammer verloren gehen oder verkanten.

Die Hydraulikpumpe ist erfindungsgemäss als Zahnradpumpe ausgestaltet. Dabei weist das Bremsmodul zumindest ein Antriebsrad und ein Abtriebsrad auf. Das Antriebsrad ist dabei durch eine erste Welle antreibbar und das Abtriebsrad ist auf einer zweiten Welle frei drehbar angeordnet. Zwischen Zähnen zumindest eines der als Antriebsrad oder als Abtriebsrad ausgeführten Zahnrades sowie zwischen zumindest eines Zahnrades und des Gehäuses ist zur Aufnahme einer Flüssigkeit ein Zwischenraum ausgestaltet. Durch das Zusammenwirken der Zahnräder sowie der in dem Zwischenraum aufgenommenen Flüssigkeit ist somit, durch den aufkommenden Staudruck, ein System geschaffen, welches bei angetriebener Welle des ersten Zahnrads die Geschwindigkeit selbsttätig regulieren kann.
In bevorzugter Ausgestaltung der Erfindung weist das Gehäuse des Bremsmoduls zumindest einen Zulauf und/oder einen Ablauf für die Flüssigkeit auf. Durch diese Maßnahme wird erreicht, dass die Flüssigkeit nachgefüllt und/oder ausgetauscht werden kann.
Die Flüssigkeit weist in bevorzugter Ausgestaltung der Erfindung eine hohe Viskosität auf. In besonders bevorzugter Ausgestaltung der Erfindung ist die Flüssigkeit ein Öl. Versuche haben ergeben, dass ein Öl die erforderlichen Eigenschaften aufweist, welche in diesem System für eine optimale Bremswirkung benötigt werden.

Die Erfindung wird nachfolgend anhand von zwei Ausführungsbeispiele in Verbindung mit den Figuren erläutert. Es zeigen:
Fig. 1 einen Laufwagen eines Schwerkraft-Hängeförderers mit einem Bremsmodul auf einem Schienenausschnitt in perspektivischer Darstellung.
Fig. 2 einen Schnitt durch das Bremsmodul aus Fig. 1 in schematischer Darstellung.
Fig. 3 einen Schnitt durch das Bremsmodul aus Fig. 1 in schematischer Darstellung.
Fig. 4 einen Teilausschnitt eines Schnittes durch das Bremsmodul aus Fig. 1 in perspektivischer Darstellung.

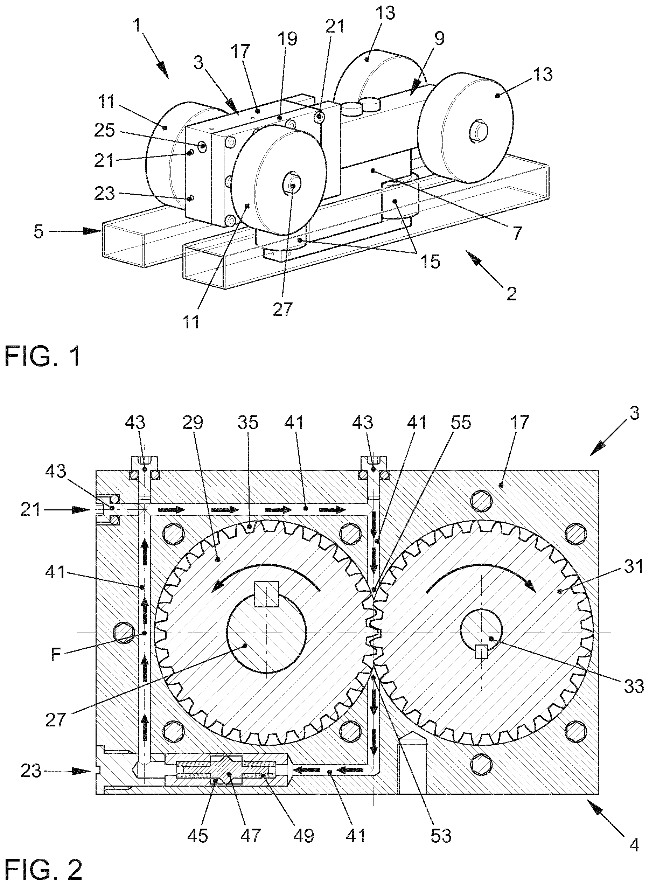

Figur 1 zeigt einen Laufwagen 1 als Teil eines Schwerkraft-Hängeförderers mit einem Bremsmodul 3 auf einem Ausschnitt eines Schienensystems 5. Der Laufwagen 1 besteht dabei im Wesentlichen aus einem Grundkörper 7, einem an diesem angeordneten Ausleger 9, zwei am Bremsmodul 3 angeordneten ersten Laufrollen 11, zwei am Ausleger 9 angeordneten zweiten Laufrollen 13 und zwei am Grundkörper 7 angeordneten Querführungsrollen 15. Das Bremsmodul 3 besteht dabei aus einem Gehäuse 17 und einem Gehäusedeckel 19, welcher mittels Schrauben 20 mit dem Gehäuse 17 verbunden ist. Dabei weist das Bremsmodul 3 stirnseitig einen Zulauf 21 und einen Ablauf 23 auf. Ebenfalls stirnseitig ist ein Drosselventil 25 angeordnet, durch welches eine Drosselung der Durchlaufgeschwindigkeit einer in dem Bremsmodul eingeschlossenen Flüssigkeit F reguliert werden kann. Die ersten Laufrollen 11 sind beidseitig am Bremsmodul 3 angeordnet und durch eine Welle 27 miteinander verbunden. Die Welle 27 durchdringt dabei das Bremsmodul 3 und ist formschlüssig mit einem hier nicht dargestellten Zahnrad verbunden. Die zweiten Laufrollen 13 sind kugelgelagert mit dem Ausleger 9 verbunden. Ebenso sind die Querführungsrollen 15 kugelgelagert mit dem Grundkörper 7 verbunden. In dem hier gezeigten Ausführungsbeispiel ist die Bewegungsrichtung des Laufwagens 1 von rechts nach links, sodass der Teil des Laufwagens 1 mit dem Bremsmodul 3 in Bewegungsrichtung vorne liegt.

Figur 2 zeigt das Bremsmodul 3 aus Figur 1 in schematischer Schnittdarstellung. Gezeigt wird das Gehäuse 17, in welchem das Antriebsrad 29 auf der ersten Welle 27 und das Abtriebsrad 31 auf einer zweiten Welle 33 gelagert sind. In dem Gehäuse sind ein Zulauf 21 und ein Ablauf 23 angeordnet. Des Weiteren ist in dem Gehäuse 17 ein umlaufender Fluidkanal 41 angeordnet, welcher mit dem Zulauf 21 und dem Ablauf 23 verbunden ist. Sowohl der Zulauf 21, als auch der Ablauf 23, sowie der Fluidkanal 41 sind durch Verschlussstücke 43 verschlossen. Des Weiteren weist der Fluidkanal 41 eine Drosselkammer 45 auf, in welcher ein Drosselelement 47 angeordnet ist, welches sich mittels Federn 49 an den Wandungen der Drosselkammer 45 abstützt. Durch den Zulauf 21 wird eine Flüssigkeit F in das Gehäuse 17 des Bremsmoduls 3 gebracht. Dieses sammelt sich beim Befüllen im Fluidkanal 41 sowie in den Zahnradzwischenräumen 35. Nach dem Befüllen mit der Flüssigkeit F wird der Fluidkanal 41 vom Befüllkanal 37 und vom Ablaufkanal 39 mittels der Verschlussstücke 43 getrennt.

In einem ersten Ausführungsbeispiel, in welchem der Laufwagen 1 von rechts nach links bewegt wird, wird das Antriebsrad 29 durch die mit der ersten Welle 27 verbundenen ersten Laufrollen 11 gegen den Uhrzeigersinn angetrieben. Dabei steht das Antriebsrad 29 durch Verzahnung mit dem Abtriebsrad 33 in Wirkverbindung, so dass das Abtriebsrad 33 im Uhrzeigersinn dreht. Sobald der Laufwagen 1 in Bewegung versetzt wird, fließt die Flüssigkeit F durch das Antriebsrad 29 bewegt mit dem Uhrzeigersinn durch den Fluidkanal 41 sowie durch das Drosselventil 25 und gegen den Uhrzeigersinn in den Zahnradzwischenräumen 35 des Abtriebsrads 31. Die Flüssigkeit F in den Zahnradzwischenräumen 35 des Abtriebsrads 31 wird in Richtung des Uhrzeigersinns bewegt. Durch die unterschiedlichen Fließrichtungen der Flüssigkeit F in den Zahnradzwischenräumen 35 entsteht im unterhalb eines Verzahnungsbereichs 51 liegenden ersten Bereichs 53 ein Druckraum, in welchem die Flüssigkeit F Staudruck ausgesetzt ist in einem oberhalb des Verzahnungsbereichs 51 liegenden zweiten Bereichs 55 ein Saugraum, in welchem die Flüssigkeit F angesaugt wird.

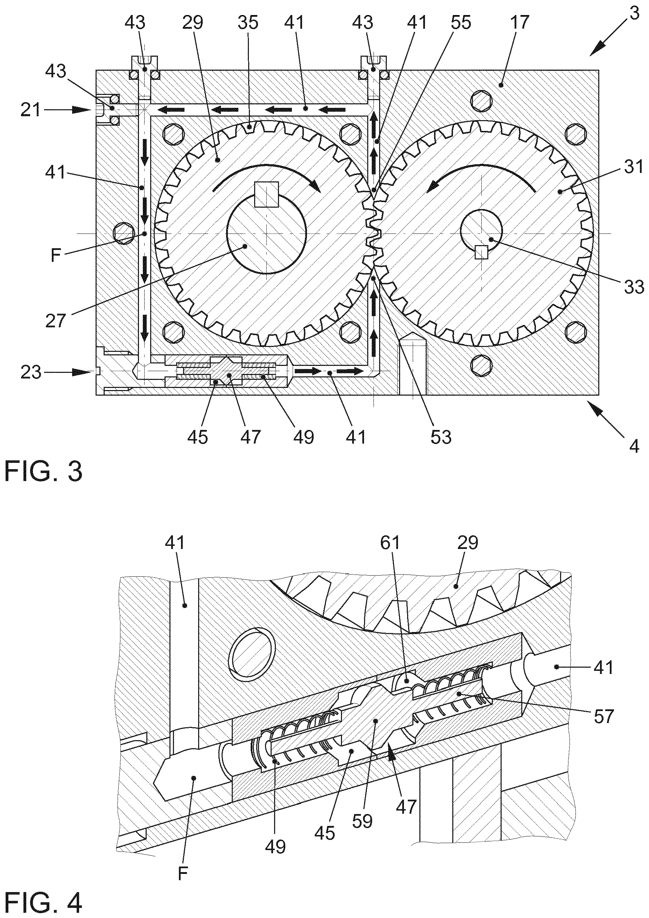

Die Flüssigkeit F wird im Fluidkanal 41 durch die Drosselkammer 45 geführt, in welcher das Drosselelement 47 angeordnet ist, welches sich mittels der Federn 49 an den Wandungen der Drosselkammer 45 abstützt. Das Drosselelement 47 wird je nach Schnelligkeit des Fluiddurchflusses und somit mittels des anliegenden Volumenstroms gegen die Federkraft der Federn 49 nach links in Richtung des Fluidkanals 41 gedrückt. Bei einer langsamen Geschwindigkeit wirkt die Feder 49 dem Staudruck der Flüssigkeit F entgegen. Ab einer kritischen Geschwindigkeit lässt sich die Feder 49 aufgrund des größer werdenden Staudrucks zusammendrücken, wodurch das Drosselelement 47 in Richtung des Fluidkanals 41 gedrückt wird. Dies hat eine selbstständige Verengung des Fluidkanals 41 an dieser Stelle zur Folge. Durch diese Querschnittsverkleinerung wird der Volumenstrom aufgestaut und die Zahnräder müssen mehr Kraft aufbringen, um das Volumen im Inneren des Gehäuses 17 zu verdrängen. Somit baut sich ein Gegendruck auf, wodurch das jeweils erforderliche Bremsmoment ab einer kritischen Geschwindigkeit hervorgerufen und durch das Antriebsrad 29 auf die mit dem Antriebsrad 29 verbundene erste Welle 27 übertragen wird und somit über die mit der ersten Welle 27 verbundene erste Laufrollen 11 ein gleichmäßiges Bremsen zur Folge hat. Dadurch kommt es zur Verzögerung und zum Abbremsen des gesamten Laufwagens. Somit erfolgt die Bremswirkung, durch die Geschwindigkeit beeinflusst, selbstgesteuert. Die genaue Ausgestaltung und Funktionsweise des Drosselelements 47 und der Drosselkammer 45 wird weiter unten in Bezug zu Figur 4 erläutert.

Figur 3 zeigt das Bremsmodul 3 aus Figur 1 in schematischer Schnittdarstellung. Dargestellt werden die bereits unter Figur 2 beschriebenen Komponenten.

In einem zweiten Ausführungsbeispiel, in welchem der Laufwagen 1 von links nach rechts bewegt wird, wird das Antriebsrad 29 durch die mit der ersten Welle 27 verbundenen ersten Laufrollen 11 mit dem Uhrzeigersinn angetrieben. Dabei steht das Antriebsrad 29 durch Verzahnung mit dem Abtriebsrad 33 in Wirkverbindung, so dass das Abtriebsrad 33 gegen den Uhrzeigersinn dreht. Sobald der Laufwagen 1 in Bewegung versetzt wird, fließt die Flüssigkeit F durch das Antriebsrad 29 bewegt gegen den Uhrzeigersinn durch den Fluidkanal 41 sowie durch das Drosselventil 25 und im Uhrzeigersinn in den Zahnradzwischenräumen 35 des Abtriebsrads 31. Die Flüssigkeit F in den Zahnradzwischenräumen 35 des Abtriebsrads 31 wird in Richtung gegen den Uhrzeigersinn bewegt. Durch die unterschiedlichen Fließrichtungen der Flüssigkeit F in den Zahnradzwischenräumen 35 entsteht im unterhalb eines Verzahnungsbereichs 51 liegenden ersten Bereich 53 ein Saugraum, in welchem die Flüssigkeit F angesaugt wird und in einem oberhalb des Verzahnungsbereichs 51 liegenden zweiten Bereich 55 ein Druckraum, in welchem die Flüssigkeit F Staudruck ausgesetzt ist.

Die Flüssigkeit F wird im Fluidkanal 41 durch die Drosselkammer 45 geführt, in welcher das Drosselelement 47 angeordnet ist, welches sich mittels der Federn 49 an den Wandungen der Drosselkammer abstützt. Das Drosselelement 47 wird je nach Schnelligkeit des Fluiddurchflusses und somit mittels des anliegenden Volumenstroms gegen die Federkraft der Federn 49 nach rechts in Richtung des Fluidkanals 41 gedrückt. Ansonsten gelten die bereits zur Figur 2 beschriebenen Bedingungen.

Figur 4 zeigt einen Teilausschnitt eines Schnittes durch das Bremsmodul aus Figur 1 in perspektivischer Darstellung. Dargestellt wird die Drosselkammer 45 mit dem Drosselelement 47, welches mittels der Federn 49 an den Wandungen der Drosselkammer abgestützt ist und unterhalb des hier nur angedeuteten Antriebsrads 29 liegt. Die Drosselkammer 45 ist dabei Bestandteil des Fluidkanals 41. Gegenüber dem Fluidkanal 41 weist die Drosselkammer 45 einen größeren Durchmesser auf, so dass eine innerhalb des Gehäuses 17 geförderte Flüssigkeit F an dem Drosselelement 47 vorbei fließen kann. Das Drosselelement 47 weist an seinen freien Enden stabförmige Bereiche 57 auf, welche innerhalb der Federn 49 liegen. Des Weiteren weist das Drosselelement 47 in etwas mittig einen Drosselbereich 59 auf, welcher einen größeren Durchmesser als die stabförmigen Bereiche 57 aufweist. Des Weiteren weist die Drosselkammer 45 in Richtung des Fluidkanals einen trichterförmigen Bereich 61 auf, welcher mit der Geometrie des Drosselbereichs 59 korrespondiert. Sobald der hier nicht dargestellte Laufwagen 1 in Bewegung versetzt wird, fließt die Flüssigkeit F in die eine oder andere Richtung durch den Fluidkanal 41 und die Drosselkammer 45 vorbei an dem Drosselelement 47, welches je nach Schnelligkeit des Flüssigkeitsdurchflusses und somit mittels des anliegenden Volumenstroms gegen die Federkraft der Federn 49 nach links oder rechts in Richtung des Fluidkanals 41 gedrückt wird. Bei einer langsamen Geschwindigkeit wirkt die Feder 49 dem Staudruck der Flüssigkeit F entgegen. Ab einer kritischen Geschwindigkeit lässt sich die Feder 49 aufgrund des größer werdenden Staudrucks zusammendrücken, wodurch das Drosselelement 47 in Richtung des Fluidkanals 41 gedrückt wird. Zunächst verengen dabei nur die stabförmigen Bereiche 57 den Fluidkanal 41, bei ansteigendem Druck jedoch auch der Drosselbereich 59, welcher bei hier höchst anzunehmendem Druck vollständig zur Anlage an dem trichterförmigen Bereich 61 kommt und somit den Fluidkanal 41 verschließt. Durch das Verschließen des Fluidkanals 41 durch das Drosselelement 47 kommt das System zum Stillstand und die hier nicht dargestellten ersten Laufrollen, welche in Verbindung mit dem Antriebsrad 29 stehen, werden größtmöglich gebremst und zum Stillstand gebracht.

### Bezugszeichenliste

- 1: Laufwagen
- 2: Schwerkraftförderer
- 3: Bremsmodul
- 4: Hydraulikpumpe/Zahnradpumpe
- 5: Schienensystem
- 7: Grundkörper
- 9: Ausleger
- 11: erste Laufrollen
- 13: zweite Laufrollen
- 15: Querführungsrollen
- 17: Gehäuse
- 19: Gehäusedeckel
- 20: Schraube
- 21: Zulauf
- 23: Ablauf
- 25: Mittel/ Drosselventil
- 27: erste Welle
- 29: Antriebsrad
- 31: Abtriebsrad
- 33: zweite Welle
- 35: Zahnradzwischenräume
- 37: Befüllkanal
- 39: Ablaufkanal
- 41: Fluidkanal
- 43: Verschlussstücke
- 45: Drosselkammer
- 47: Drosselelement
- 49: Feder
- 51: Verzahnungsbereich
- 53: erster Bereich
- 55: zweiter Bereich

## Patentansprüche

1. Laufwagen (1) für einen Schwerkrafthängeförderer (2) mit einem Bremsmodul (3), welches eine erste Welle (27) sowie eine Hydraulikpumpe (4) aufweist und zur Förderung von Flüssigkeiten (F) geeignete Teile dieser mit der ersten Welle (27) verbunden sind, wobei die Hydraulikpumpe zumindest ein Antriebsrad (29) und ein Abtriebsrad (31) umfasst, wobei das Antriebsrad (29) durch die erste Welle (27) antreibbar ist und das Abtriebsrad (31) auf einer zweiten Welle (33) frei drehbar angeordnet ist und ein Zahnradzwischenraum (35) zwischen Zähnen des Antriebrads (29) und/oder des Abtriebsrads (31) sowie des Gehäuses zur Aufnahme der Flüssigkeit (F) ausgestaltet wobei das Bremsmodul (3) zumindest einen Fluidkanal (41) aufweist, an dem ein zur Drosselung der Fließgeschwindigkeit einer in dem Fluidkanal (41) befindlichen Flüssigkeit (F) sowie zum Verschließen des Fluidkanals (41) geeignetes Drosselelement (47) angeordnet ist, wobei das Drosselelement (47) dazu geeignet ist, den Fluidkanal (41) zumindest an zwei Stellen zu verengen.

2. Laufwagen (1) nach Anspruch 1, **dadurch gekennzeichnet, dass** das Drosselelement (47) in einer Drosselkammer (45) innerhalb des Fluidkanals (41) angeordnet ist, wobei die Drosselkammer(45) zumindest teilweise einen größeren Durchmesser als der übrige Fluidkanal (41) aufweist.

3. Laufwagen (1) nach Anspruch 1 oder 2, **dadurch gekennzeichnet dass**, das Drosselelement (47) an seinen freien Enden im Wesentlichen stabförmige Bereiche (57) und im Wesentlichen mittig einen Drosselbereich (59) aufweist, dessen Durchmesser im Verhältnis zu den stabförmigen Bereichen (57) größer ist.

4. Laufwagen (1) nach Anspruch 3, **dadurch gekennzeichnet, dass** Federn (49) in Verbindung mit dem Drosselbereich (59) und Wandungen der Drosselkammer (45) stehen oder in Anlage gebracht werden können.

5. Laufwagen (1) nach Anspruch 4, **dadurch gekennzeichnet, dass** die stabförmigen Bereiche (57) des Drosselelements (47) zumindest teilweise innerhalb der Federn (49) liegen.

6. Laufwagen (1) nach Anspruch 4 oder 5, **dadurch gekennzeichnet, dass** Mittel (25) zur Einstellung des Federdrucks der Federn (49) am Bremsmodul (3) angeordnet sind.

7. Laufwagen (1) nach einem der vorherigen Ansprüche, **dadurch gekennzeichnet, dass** das Bremsmodul (3) zumindest einen Zulauf (21) und/oder einen Ablauf (23) für die Flüssigkeit
(F) aufweist.

8. Laufwagen (1) nach einem der vorhergehenden Ansprüche, **dadurch gekennzeichnet, dass** die Flüssigkeit (F) eine hohe Viskosität aufweist.

## Claims

1. Trolley (1) for a suspended gravity conveyor (2) having a brake module (3) which has a first shaft (27) and a hydraulic pump (4), parts of which hydraulic pump (4), which are suitable for conveying liquids (F), are connected to the first shaft (27), the hydraulic pump comprising at least one drive wheel (29) and one output wheel (31), it being possible for the drive wheel (29) to be driven by way of the first shaft (27), and the output wheel (31) being arranged on a second shaft (33) such that it can be rotated freely, and a gearwheel intermediate space (35) configured between teeth of the drive wheel (29) and/or of the output wheel (31) and the housing for receiving the liquid (F), the brake module (3) having at least one fluid duct (41), on which a throttle element (47) is arranged which is suitable for throttling the flow velocity of a liquid (F) which is situated in the fluid duct (41) and for closing the fluid duct (41), the throttle element (47) being suitable for constricting the fluid duct (41) at least at two locations.

2. Trolley (1) according to Claim 1, **characterized in that** the throttle element (47) is arranged in a throttled chamber (45) within the fluid duct (41), the throttle chamber (45) having at least partially a greater diameter than the remaining fluid duct (41).

3. Trolley (1) according to Claim 1 or 2, **characterized in that** the throttle element (47) has substantially rod-shaped regions (57) at its free ends and a throttle region (59) substantially centrally, the diameter of which throttle region (59) is greater in comparison with the rod-shaped regions (57).

4. Trolley (1) according to Claim 3, **characterized in that** springs (49) are connected to, or can be brought into contact with, the throttle region (59) and walls of the throttle chamber (45).

5. Trolley (1) according to Claim 4, **characterized in that** the rod-shaped regions (57) of the throttle element (47) lie at least partially within the springs (49).

6. Trolley (1) according to Claim 4 or 5, **characterized in that** means (25) for setting the spring pressure of the springs (49) are arranged on the brake module (3).

7. Trolley (1) according to one of the preceding claims, **characterized in that** the brake module (3) has at least one inlet (21) and/or one outlet (23) for the liquid (F).

8. Trolley (1) according to one of the preceding claims, **characterized in that** the liquid (F) has a high viscosity.

## Revendications

1. Chariot (1) pour un transporteur suspendu à gravité (2) comprenant un module de frein (3), qui présente un premier arbre (27) ainsi qu'une pompe hydraulique (4), et des parties de celle-ci appropriées pour le refoulement de liquides (F) sont connectées au premier arbre (27), la pompe hydraulique comprenant au moins une roue d'entraînement (29) et une roue de sortie (31), la roue d'entraînement (29) pouvant être entraînée par le premier arbre (27) et la roue de sortie (31) étant disposée de manière à pouvoir tourner librement sur un deuxième arbre (33) et un espace intermédiaire de roues dentées (35) configuré entre les dents de la roue d'entraînement (29) et/ou de la roue de sortie (31) ainsi que du boîtier pour recevoir le liquide (F) le module de frein (3) présentant au moins un canal de fluide (41) au niveau duquel est disposé un élément d'étranglement (47) adapté pour étrangler la vitesse d'écoulement d'un liquide (F) se trouvant dans le canal de fluide (41) ainsi que pour fermer le canal de fluide (41), l'élément d'étranglement (47) étant adapté pour à rétrécir le canal de fluide (41) au moins en deux endroits.

2. Chariot (1) selon la revendication 1, **caractérisé en ce que** l'élément d'étranglement (47) est disposé dans une chambre d'étranglement (45) à l'intérieur du canal de fluide (41), la chambre d'étranglement (45) présentant au moins en partie un plus grand diamètre que le reste du canal de fluide (41).

3. Chariot (1) selon la revendication 1 ou 2, **caractérisé en ce que** l'élément d'étranglement (47) présente au niveau de ses extrémités libres des régions essentiellement en forme de barre (57), et essentiellement au milieu, une région d'étranglement (59) dont le diamètre est supérieur par rapport aux régions en forme de barre (57).

4. Chariot (1) selon la revendication 3, **caractérisé en ce que** des ressorts (49) sont en liaison ou peuvent être amenés en appui avec la région d'étranglement (59) et avec des parois de la chambre d'étranglement (45).

5. Chariot (1) selon la revendication 4, **caractérisé en ce que** les régions en forme de barre (57) de l'élément d'étranglement (47) sont situées au moins en partie à l'intérieur des ressorts (49).

6. Chariot (1) selon la revendication 4 ou 5, **caractérisé en ce que** les moyens (25) sont prévus pour ajuster la pression de ressort du ressort (49) au niveau du module de frein (3).

7. Chariot (1) selon l'une quelconque des revendications précédentes, **caractérisé en ce que** le module de frein (3) présente au moins une alimentation (21) et/ou une sortie (23) pour le liquide (F).

8. Chariot (1) selon l'une quelconque des revendications précédentes, **caractérisé en ce que** le liquide (F) présente une viscosité élevée.
